# EUROPÄISCHE PATENTSCHRIFT

(11) **EP 1 584 397 B1**
(45) Veröffentlichungstag und Bekanntmachung des Hinweises auf die Patenterteilung: **10.07.2013**
(21) Anmeldenummer: 05100282.2
(22) Anmeldetag: 18.01.2005
(51) Int. Cl.: B23H 9/14, B23H 7/26

(54) **Vorrichtung zum Erodieren konischer Bohrungen**
Device for erosion machining conical passages.
Machine pour la production de trous coniques.

(30) Priorität: 19.03.2004 DE 102004013549
(43) Veröffentlichungstag der Anmeldung: 12.10.2005
(73) Patentinhaber: ROBERT BOSCH GMBH, 70442 Stuttgart (DE)
(72) Erfinder: Schubert, Juergen, 96049 Bamberg (DE); Hoppe, Volker, 35781 Weilburg (DE); Schramm, Gerda, 96169 Lauter (DE); Pluta, Janusz, 91352 Pautzfeld (DE); Herold, Stefan, 96175 Pettstadt (DE); Grota, Beate, 96215 Lichtenfels (DE)

(56) Entgegenhaltungen:
- EP-A- 0 636 443
- WO-A-02/058875
- DE-A1- 2 328 224
- US-A- 4 152 570

## Beschreibung

### Stand der Technik

In vielen Bereichen der Technik ist es erforderlich, konische Bohrungen zu erodieren. Beispielsweise werden in Einspritzdüsen oder Injektoren der Kraftstoffeinspritzsysteme von Brennkraftmaschinen zunehmend konische Spritzlöcher mit Durchmessern im Bereich von wenigen zehntel Millimetern eingesetzt. Dabei sind die Genauigkeitsanforderungen sowohl hinsichtlich des Durchmessers als auch der Konizität und der hydraulischen Eigenschaften, wie zum Beispiel des Strömungswiderstands, sehr hoch.

Bislang wird bei der Anmelderin zum Erodieren konischer Bohrungen eine Drahtelektrode verwendet, die während des Erodiervorgangs in Schwingung versetzt wird, so dass ein freies Ende der Drahtelektrode wie ein Pendel hin und her schwingt. Da diese Pendelbewegung nicht auf eine Ebene beschränkt ist, wird durch die Pendelbewegung der Drahtelektrode während des Erodiervorgangs eine konische Bohrung aus dem Werkstück herauserodiert. Nachteilig an diesem Verfahren ist, dass die Konizität der Bohrung nicht steuerbar ist, da sie von vielen Prozessparametern abhängt, die in aller Regel nicht oder nur in sehr geringem Umfang verändert werden können.

Ein anderes von der Firma PosaLux verwendetes Verfahren besteht darin, die Drahtelektrode durch die Führungsbohrung einer drehbaren Führungsscheibe hindurchzuführen. Die Führungsbohrung und die Drehachse der Führungsplatte schließen einen Winkel größer 0° ein. Wenn sich die Führungsscheibe während des Erodiervorgangs dreht, überstreicht die Drahtelektrode eine Kegelmantelfläche, sodass kegelförmige Bohrungen hergestellt werden können. Nachteilig an diesem Verfahren ist, dass die Konizität während der Serienfertigung von Bohrungen nicht geregelt werden kann, da der Kegelwinkel der erodierten Bohrung durch den Winkel, welchen die Führungsbohrung und die Drehachse der Führungsplatte einschließen, fest vorgegeben ist. Dies bedeutet auch, dass der Kegelwinkel nur durch Auswechseln der Führungsscheibe geändert werden kann.

Außerdem hat bei diesem Verfahren die Spitze der Kegelmantelfläche einen großen Abstand zu dem zu bearbeitenden Werkstück. Dieser Abstand verhindert die Bearbeitung konischer Bohrungen mit kleinen Durchmessern.

Die Erfindung betrifft eine Vorrichtung mit den Merkmalen des Oberbegriffs des Anspruchs 1. Eine derartige Vorrichtung ist aus DE 2 328 224 bekannt.

### Vorteile der Erfindung

Bei einer erfindungsgemäßen Vorrichtung zum Erodieren mit einer Elektrode und mit einer Elektrodenführung und mit einer Halterung für die Elektrodenführung gemäß Anspruch 1 ist das Gelenklager mit einer Kalotte und einem kegelförmigen Widerlager ausgebildet. Besonders vorteilhaft an dieser Variante ist, dass durch eine geeignete Wahl des Radius der Kalotte der Drehpunkt der Elektrodertführung aus der Elektrodenführung heraus verlagert werden kann. Der Drehpunkt der Elektrodenführung fällt mit der Spitze des Kegelmantels zusammen, den die Elektrode überstreicht, um eine konische Bohrung herzustellen. Wenn die Spitze des Kegelmantels zum Werkstück hin verlagert wird, verringert sich der Mindestdurchmesser der konischen Bohrungen. Wenn die Spitze des Kegelmantels innerhalb des Werkstücks liegt, können sogar doppelt kegelstumpfförmige Bohrungen hergestellt werden. Bei der erfindungsgemäßen Vorrichtung zum Erodieren ist es möglich, unabhängig von anderen Prozessparametren, die Konizität der zu erodierenden Bohrung stufenlos und ohne Umrüsten der Vorrichtung einzustellen. Dadurch kann in der Serienfertigung die Konizität fortlaufend auf einen vorgegebenen Sollwert geregelt werden, so dass die Streuungen innerhalb der Serienfertigung minimiert werden und gleiche Werkstücke einer Serie nahezu identische hydraulische und geometrische Eigenschaften haben. Außerdem ist es möglich, an verschiedenen konischen Bohrungen eines Werkstücks ohne Umrüsten der Erodiervorrichtung verschiedene Kegelwinkel auszubilden.

Außerdem ist die erfindungsgemäße Vorrichtung vergleichsweise einfach aufgebaut, so dass eine an und für sich vorhandene Erodiermaschine durch Austausch des Erodierkopfes, welcher die erfindungsgemäße Lagerung und Einrichtung zum Auslenken der Elektrodenführung aufweist, ersetzt werden kann. Dadurch ist es möglich, bestehende Produktionseinrichtungen auf sehr wirtschaftliche Weise zu ertüchtigen.

Die im Zusammenhang mit der Erfindung beanspruchte Einrichtung zum Auslenken der Elektrodenführung kann die Elektrodenführung durch mechanische, hydraulische, pneumatische, magnetische oder elektrische Kräfte auslenken. Das Prinzip der Erfindung kann mit allen diesen Varianten realisiert werden. Welcher dieser Varianten der Vorzug gegeben wird, kann in Abhängigkeit anderer Randbedingungen und Prozessparameter entschieden werden.

Bei einer vorteilhaften Ausgestaltung der Erfindung weist die Einrichtung zum Auslenken der Elektrodenführung einen mit der Elektrodenführung verbundenen ersten magnetisierbaren Ring auf, sowie einen mit der Halterung verbundenen zweiten magnetisierbaren Ring und mehrere über den Umfang des zweiten magnetisierbaren Rings verteilte und mit diesem verbundene Spulen. Durch diese Anordnung ist es möglich, durch eine geeignete Ansteuerung einer oder mehrerer Spulen die Elektrodenführung in jede beliebige Richtung senkrecht zur Längsachse der Elektrode auszulenken. Wenn nun durch eine geeignete Ansteuerung der Spulen die Elektrodenführung so ausgelenkt wird, dass die in ihr geführte Elektrode einen Kegelmantel überstreicht, können mit der Elektrode konische Bohrungen hergestellt werden. Je nach Auslenkung der Elektrodenführung kann der Kegelwinkel der konischen Bohrung stufenlos bis zu einem durch die Vorrichtung vorgegebenen Maximalwert ausgelenkt werden. Dies bedeutet einerseits, dass auf einfache Weise während einer Serienfertigung die Konizität der Bohrungen nachgeregelt werden kann und andererseits bei einem Werkstück konische Bohrungen mit unterschiedlichen Kegelwinkeln ohne Umrüsten der erfindungsgemäßen Vorrichtung hergestellt werden können.

Eine besonders einfache Ansteuerung der Einrichtung zum Auslenken der Drahtelektrode besteht darin, drei Spulen an eine Drehstromquelle anzuschließen. Das durch den Drehstrom verursachte Magnetfeld läuft mit der Frequenz des Drehstroms um, so dass die Elektrode die gewünschte Bewegung auf einem Kegelmantel ausführt. Durch die Regelung der Stärke des Stroms oder durch die Regelung der Frequenz oder eine Kombination dieser Varianten kann der Kegelwinkel der konischen Bohrung geregelt werden. Bei diesen Ausführungsformen muss das Gelenk eine Rückstellkraft aufweisen, so dass die Elektrodenführung in ihre Ausgangslage zurückkehrt, wenn die Einrichtung zum Auslenken der Drahtelektrode nicht aktiv ist.

Alternativ kann die Einrichtung zum Auslenken der Elektrodenführung auch mehrere über den Umfang der Elektrodenführung verteilte Piezoaktoren umfassen. Auch hier kann durch geeignete Ansteuerungen einer oder mehrerer dieser Piezoaktoren die Elektrodenführung in jede Richtung senkrecht zur Längsachse der Elektrode ausgelenkt werden und somit jeder gewünschte Kegelwinkel der konischen Bohrung eingestellt werden.

Besonders einfach aufgebaute Ausführungsformen der Erfindung sehen vor, dass die Einrichtung zum Auslenken mindestens eine in die Halterung eingedrehte Stellschraube umfasst, und/oder dass die Einrichtung zum Auslenken mindestens eine Druckfeder umfasst, wobei die mindestens eine Druckfeder die Elektrodenführung in Anlage an der Stellschraube hält. Bei dieser Ausführungsform kann die Konizität einer zu erodierenden Bohrung stufenlos und sehr genau mit Hilfe der Stellschraube eingestellt werden.

Das Gelenk zur Lagerung der Elektrodenführung ist bei einer vorteilhaften Ausgestaltung der Erfindung als Kugelgelenk mit einer Kalotte an der Elektrodenführung und mit einem Widerlager an der Halterung ausgeführt. Besonders vorteilhaft ist dabei, dass durch eine geeignete Wahl des Radius' der Kalotte der Drehpunkt der Elektrodenführung aus der Elektrodenführung heraus verlagert werden kann. Der Drehpunkt der Elektrodenführung fällt mit der Spitze des Kegelmantels zusammen, den die Elektrode überstreicht, um eine konische Bohrung herzustellen. Wenn die Spitze des Kegelmantels zum Werkstück hin verlagert wird, verringert sich der Mindestdurchmesser der konischen Bohrungen. Wenn die Spitze des Kegelmantels innerhalb des Werkstücks liegt, können sogar doppelt kegelstumpfförmige Bohrungen hergestellt werden. Es ist auch denkbar und möglich, die Elektrodenführung hydraulisch, pneumatisch oder durch Magnetkräfte an der Halterung zu lagern.

Erfindungsgemäß kann auch vorgesehen sein, die Halterung und mit ihr die Elektrodenführung während des Erodierens in Drehung zu versetzen. Dadurch wird eine sehr gute Rundheit der konischen Bohrung gewährleistet. Außerdem muss die Elektrode nur noch in einer Richtung ausgelenkt werden, um eine konische Bohrung herstellen zu können. Diese Auslenkung in einer Richtung geht besonders einfach und gut mit einer Stellschraube und mindestens einer Druckfeder.

Die Elektrodenführung kann als Rundführung oder als zweiteilige Führung, welche die Elektrode in radialer Richtung ohne Radialspile führt oder sogar klemmt, ausgebildet sein.

Die Rundheit der mit der erfindungsgemäßen Vorrichtung erodierten Bohrungen kann weiter verbessert werden, wenn eine Einrichtung zum Drehen der Elektrode vorgesehen ist.

Um die Elektrode positionieren zu können und auch in Richtung der Längsachse der Elektrode eine Zustellbewegung ausführen zu können, ist eine Vorschubeinrichtung für die Elektrode vorgesehen. Dabei kann die Vorschubeinrichtung den Erodierkopf und/oder die Drahtelektrode in allen drei Raumesrichtungen bewegen, so dass nicht nur eine Vorschubbewegung der Drahtelektrode, sondern auch das Positionieren der Elektrode relativ zu einem Werkstück mit der beanspruchten Vorschubeinrichtung möglich ist.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen Merkmale können sowohl einzeln als auch in beliebiger Kombination miteinander erfindungswesentlich sein.

### Zeichnung

Es zeigen:
- Figur 1: eine beispiel nicht erfindungsgemäße Vorrichtung im Längsschnitt,
- Figur 2: Ein nicht erfindungsgemäßen Vorrichtung im Querschnitt,
- Figur 3: eine erfindungsgemäße Vorrichtung im Längsschnitt und
- Figur 4: das Ausführungsbeispiel einer erfindungsgemäßen Vorrichtung im Querschnitt.

### Beschreibung der Ausführungsbeispiele

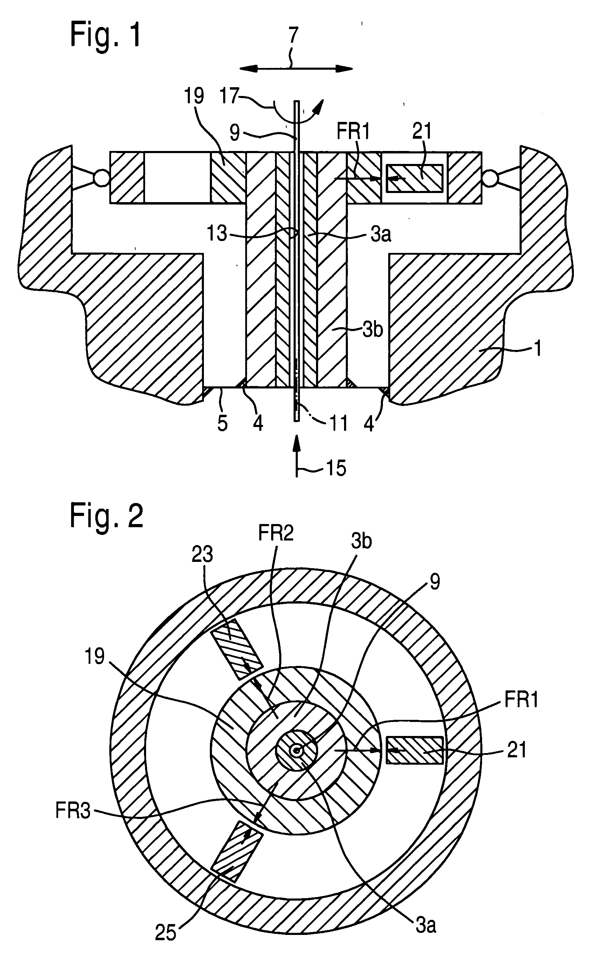

In Figur 1 ist eine nicht erfindungsgemäßen Vorrichtung zum Erodieren stark vereinfacht im Längsschnitt dargestellt. In einer Halterung 1 sind eine Elektrodenführung 3a und eine Aufnahme 3b für die Elektrodenführung 3a gelenkig gelagert. Bei dieser Ausführung kann die Elektrodenführung 3a leicht ausgetauscht werden, beispielsweise, wenn auf eine andere Drahtstärke umgerüstet werden soll oder wenn die Elektrodenführung 3a verschlissen ist.

Die Halterung 1 ist Teil einer nicht dargestellten Erodiermaschine. Die nicht dargestellten Teile der Erodiermaschine sind jedem Fachmann aus dem Stand der Technik bekannt und werden deshalb nicht näher erläutert.

Bei dem in Figur 1 dargestellten Vorrichtung ist die gelenkige Lagerung durch eine Membran 5 aus Metall realisiert, die an ihrem Außendurchmesser beispielsweise durch eine Schweißnaht 4 fest mit der Halterung 1 verbunden ist. Innen ist die Membran 5 bei diesem Ausführungsbeispiel mit einem Ende der Aufnahme 3b für die Elektrodenführung 3a Elektrodenführung 3 mittels einer Schweißnaht 4 verbunden. Durch diese Lagerung hat die Elektrodenführung 3a einen Freiheitsgrad in Richtung des Doppelpfeils 7 sowie einen Freiheitsgrad senkrecht zur Zeichenebene. In anderen Worten: Die Elektrodenführung 3a kann senkrecht zur Längsachse einer Elektrode 9 ausgelenkt werden. Der Drehpunkt der gelenkigen Lagerung ist in Figur 1 mit dem Bezugszeichen 11 angedeutet.

Die Elektrode 9 wird in einer Bohrung 13 der Elektrodenführung 3a in radialer Richtung geführt. Das Spiel zwischen Bohrung 13 und Elektrode 9 ist in Figur 1 stark vergrößert dargestellt.

Durch eine nicht dargestellte Vorschubeinrichtung kann die Elektrode 9 unter anderem in Richtung des Pfeils 15 aus der Elektrodenführung 3a hinausgeschoben und auch wieder zurückgezogen werden. Dadurch kann der Verschleiß der Elektrode 9 ausgeglichen werden, und es kann eine Vorschubbewegung während des Erodiervorgangs vorgenommen werden. Außerdem kann Halterung 1 und mit ihr die Elektrode 9 durch eine nicht dargestellte Einrichtung in eine Drehbewegung um ihre Längsachse versetzt werden. Dies ist in Figur 1 durch einen gekrümmten Pfeil 17 angedeutet. Durch das Drehen der Elektrode 9 während des Erodiervorgangs wird die Rundheit der erodierten Bohrung verbessert. Die Lagerung der Halterung 1 ist in Figur 1 nicht dargestellt.

An dem Ende der Aufnahme 3b für die Elektrodenführung 3a, welche der Membran 5 gegenüberliegt, ist ein erster magnetisierbarer Ring 19 fest mit der Aufnahme 3b und damit mittelbar auch mit der Elektrodenführung 3a verbunden. Auf gleicher Höhe des ersten magnetisierbaren Rings 19 sind über den Umfang verteilt mehrere Spulen 21, 23 und 25 angeordnet, von denen in Figur 1 nur die Spule 21 sichtbar ist. Durch Bestromen der Spule 21 kann eine erste Radialkraft Fᵣ₁ auf den ersten magnetisierbaren Ring ausgeübt werden. Dadurch wird die Elektrodenführung 3a an ihrem der Membran 5 gegenüberliegenden Ende in radialer Richtung ausgelenkt.

In Figur 2 ist eine Ansicht von oben auf die Elektrode 9, die Aufnahme 3b für die Elektrodenführung 3a sowie die Spulen 21, 23 und 25 dargestellt. Aus dieser Darstellung wird deutlich, dass jede der Spulen 21, 23 und 25 durch entsprechende Bestromung eine Radialkraft Fᵣ₁, Fᵣ₂ und/oder Fᵣ₃ auf den magnetisierbaren Ring 19 ausüben kann. Dies bedeutet auch, dass durch eine geeignete Bestromung der Spulen 21, 23 und 25 die Elektrodenführung 3a in jede Richtung innerhalb der Zeichenebene von Figur 2 ausgelenkt werden kann.

Wenn man die Spulen 21, 23 und 25 mit Drehstrom versorgt, entsteht ein mit der Frequenz des Drehstroms umlaufendes Magnetfeld, das den ersten magnetisierbaren Ring 19 und mit ihm die Elektrodenführung 3a so auslenkt, dass sie mit ihrem der Membran 5 entgegengesetzten Ende eine kreisförmige Bewegung ausführt. Dies bedeutet nichts anderes, als dass die Elektrode 9 eine Kegelmantelfläche (nicht dargestellt) überstreicht, deren Spitze mit dem Drehpunkt 11 zusammenfällt.

Somit ist es möglich, mit dem Teil der Elektrode 9, welcher über die Elektrodenführung 3 hinausragt, eine konische Bohrung in ein nicht dargestelltes Werkstück zu erodieren. Je nachdem wie stark die Elektrodenführung 3a an ihrem der Membran 5 gegenüberliegenden Ende ausgelenkt wird, kann der Kegelwinkel der konischen Bohrung stufenlos eingestellt werden. Dies hat den großen Vorteil, dass während der Fertigung einer Serie der Kegelwinkel stetig nachgeregelt werden kann, so dass eine sehr gleichbleibende Fertigungsqualität erreicht werden kann.

Um die von den Spulen 21, 23 und 25 erzeugten Magnetfelder besser führen zu können, ist zwischen den Spulen 21, 23 und 25 und der Halterung 1 ein zweiter magnetisierbarer Ring 27 vorgesehen.

Die gewünschte kreisförmige Bewegung der Elektrode 9 an dem der Membran 5 gegenüberliegenden Ende der Elektrodenführung 3 wird bei diesem Ausführungsbeispiel durch ein rotierendes Magnetfeld hervorgerufen. Dieses rotierende Magnetfeld wiederum kann durch einen Drehstrom, der durch die drei um 120° versetzten Spulen 21, 23 und 25 geleitet wird, auf einfachste Weise erzeugt werden. Zur Regelung der Auslenkung der Elektrodenführung 3a und damit auch der Elektrode 9 bieten sich zwei Regelstrategien an.

Der Kegelwinkel kann über die Stärke des Magnetfelds geregelt werden. Wenn die Drehfrequenz des Magnetfelds außerhalb des Resonanzbereichs der Aufnahme 3b und der Elektrodenführung 3a liegt, nimmt die Auslenkung der Elektrodenführung 3a linear der Magnetfeldstärke und damit der Stromstärke zu. Dies bedeutet, dass der Kegelwinkel auf einfache Weise steuerbar ist.

Bei einer zweiten Regelstrategie kann der Kegelwinkel über die Frequenz des Drehfeldes geregelt werden. Wenn nämlich die Frequenz des Drehfeldes an die Resonanzfrequenz des aus Aufnahme 3b, Elektrodenführung 3a und Membran 5 gebildeten schwingungsfähigen Systems angenähert wird, nimmt die radiale Auslenkung zu. Wenn die erfindungsgemäße Vorrichtung in der Nähe der Resonanzfrequenz betrieben wird, können möglicherweise kompaktere Bauformen realisiert werden, da kleinere Magnetkräfte und damit kleinere Spulen 21, 23 und 25 erforderlich sind.

Auch eine Kombination beider Regelstrategien ist möglich.

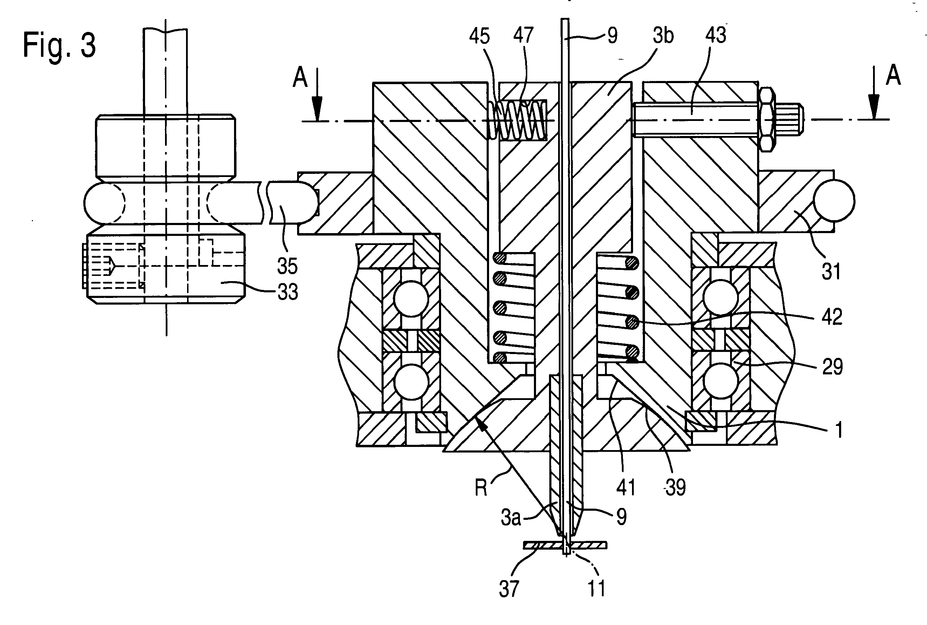

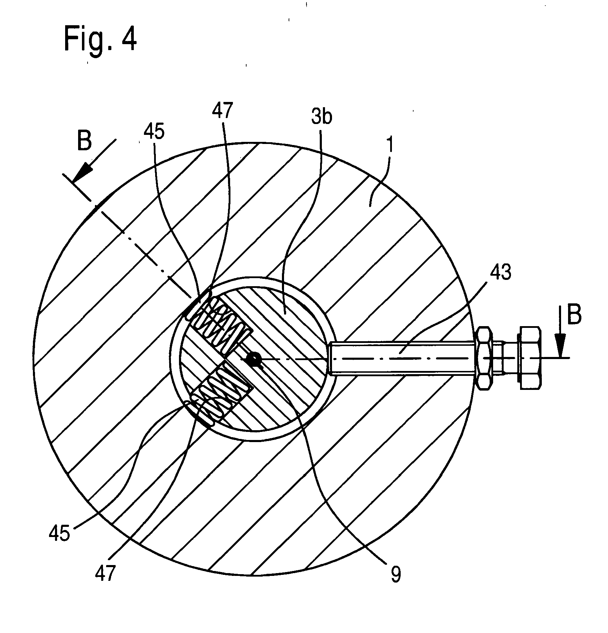

Figur 3 zeigt ein Ausführungsbeispiel einer erfindungsgemäßen Vorrichtung ebenfalls stark vereinfacht und im Längsschnitt entlang der Linie B-B (siehe Figur 4). Bei diesem Ausführungsbeispiel ist die Halterung 1 drehbar gelagert. Die Lager der Halterung 1 sind mit dem Bezugszeichen 29 versehen. Im oberen Teil der Halterung 1 ist eine Riemenscheibe 31 vorgesehen.

Neben der Halterung 1 ist eine Antriebswelle 33 vorgesehen, die von einem nicht dargestellten Elektromotor angetrieben wird. Über einen Riemen 35 kann die Drehbewegung der Antriebswelle 33 auf die Riemenscheibe 31 und damit auf die Halterung 1, die Aufnahme 3b und die Elektrodenführung 3a übertragen werden.

Die Elektrodenführung 3a nimmt, wie auch beim ersten Ausführungsbeispiel, eine Elektrode 9 auf. Die Elektrode 9 ist in Figur 3 sehr viel dicker dargestellt, als sie es in der Realität ist. Die erfindungsgemäße Vorrichtung soll nämlich u.a. dazu dienen, kleinste Löcher (nicht dargestellt) in ein Werkstück 37 zu erodieren. Diese Löcher haben in der Regel einen Durchmesser von wenigen 10tel Millimetern.

An ihrem dem Werkstück 37 zugewandten Ende weist die Aufnahme 3b für die Elektrodenführung 3a eine Durchmessererweiterung auf, die teilweise kalottenförmig ausgebildet ist. Der kalottenförmige Teil der Durchmessererweiterung der Aufnahme 3b ist mit dem Bezugszeichen 39 versehen. An ihrem unteren Ende weist die Halterung 1 eine Kegelfläche 41 auf, welche ein Widerlager für die Kalotte 39 der Aufnahme 3b darstellt.

Mit Hilfe einer Druckfeder 42, die sich einenends an einem Absatz der Halterung 1 und anderenends an einem Absatz der Elektrodenführung 3 abstützt, wird die Kalotte 39 in Anlage an dem Widerlager 41 gehalten. An dem dem Widerlager 41 entgegengesetzten Ende der Halterung 1 ist eine Stellschraube 43 vorhanden, die die Aufnahme 3b und damit auch die Elektrodenführung 3 in Figur 3 nach links seitlich auslenken kann. Durch mehr oder minder weites Eindrehen der Stellschraube 43 in die Halterung 1 kann somit der Winkel zwischen der Elektrodenführung 3a einerseits und der Halterung 1 andererseits eingestellt werden.

Damit die Aufnahme 3b für die Elektrodenführung 3a stets in Anlage an der Stellschraube 43 bleibt, ist gegenüber der Stellschraube 43 mindestens eine Druckfeder 45 vorgesehen. Diese Druckfeder 45 ist bei dem in Figur 3 dargestellten Ausführungsbeispiel in einer Sacklochbohrung 47 in der Aufnahme 3b angeordnet. Die Druckfeder 45 stützt sich einenends in radialer Richtung gegen die Aufnahme 3b und anderenends gegen die Halterung 1 ab.

Die Figur 4 stellt einen Schnitt durch die Halterung 1 und die Elektrodenführung 3 entlang der Linie A-A (siehe Figur 3) dar. Aus der Zusammenschau der Figuren 3 und 4 ergibt sich, dass bei diesem Ausführungsbeispiel zwei Druckfedern 45 vorhanden sind, die mit der Längsachse der Stellschraube 43 jeweils einen Winkel von etwa 120° einschließen. Dadurch ist gewährleistet, dass die Aufnahme 3b für die Elektrodenführung 3 stets in Anlage an der Stellschraube 43 gehalten wird und nicht seitlich ausweichen kann.

Bei dem Ausführungsbeispiel gemäß Figur 3 ist der Mittelpunkt 11 der Kalotte 39 dort, wo die Elektrode 9 die Oberfläche des Werkstücks 37 berührt. Der Mittelpunkt 11 der Kalotte 39 und der Drehpunkt der Aufnahme 3b für die Elektrodenführung 3a fallen somit zusammenfallen. Dies bedeutet, dass, wenn die Elektrodenführung 3a mit Hilfe der Stellschraube 43 relativ zur Halterung 1 ausgelenkt wird und anschließend die Halterung 1 in Drehung versetzt wird, das von der Elektrode 9 hergestellte Spritzloch (nicht dargestellt) in dem Werkstück 37 eine konische Gestalt aufweist. Dabei hat die konische Bohrung ihren kleinsten Durchmesser oben an dem Werkstück 37.

Wenn das Werkstück 37 näher in Richtung der Halterung 1 bewegt wird, kann der Mittelpunkt 11 der Kalotte 39 auch innerhalb des Werkstücks 37 liegen. Dadurch ist es auch möglich, konische Bohrungen herzustellen, deren größter Durchmesser an der Unterseite des Werkstücks 37 liegt. Ebenso ist es möglich, doppelt kegelstumpfförmige Bohrungen zu erodieren, wenn nämlich der Mittelpunkt 11 der Kalotte 39 zwischen der Oberseite und der Unterseite des Werkstücks 37 liegt.

Das anhand der Figuren 3 und 4 dargestellte Ausführungsbeispiel ist einerseits sehr einfach im Aufbau und bietet sehr viele Freiheitsgrade bei der Herstellung. Diese Freiheitsgrade kommen besonders positiv zu tragen, wenn kleinste Bohrungen, deren Minimaldurchmesser etwa gleichgroß wie der Durchmesser der Elektrode 9 ist, konisch hergestellt werden sollen.

## Patentansprüche

1. Vorrichtung zum Erodieren, mit einer Elektrode (9) und mit einer Aufnahme (3b) für eine Elektrodenführung (3), und mit einer Halterung (1) für die Aufnahme (3b), wobei die Aufnahme (3b) für die Elektrodenführung (3) an der Halterung (1) mit einem Gelenklager gelagert ist, und das Gelenklager eine Kalotte (39) an der Aufnahme (3b) für die Elektrodenführung und ein Widerlager an der Halterung (1) umfasst und wobei das Gelenklager am unteren Ende der Elektrodenführung (3) angeordnet ist, **dadurch gekennzeichnet, dass** das Widerlager an der Halterung (1) als Kegelfläche (41) ausgebildet ist, und dass eine Einrichtung zum Auslenken der Elektrodenführung (3) an einem dem Gelenklager (39, 41) gegenüberliegenden Ende der Elektrodenführung (3) vorgesehen ist.

2. Vorrichtung nach Anspruch 1, **dadurch gekennzeichnet, dass** die Einrichtung zum Auslenken mechanische, hydraulische, pneumatische, magnetische oder elektrische Kräfte in die Aufnahme (3b) für die Elektrodenführung (3) eingleitet.

3. Vorrichtung nach Anspruch 1 oder 2, **dadurch gekennzeichnet, dass** die Einrichtung zum Auslenken einen mit der Aufnahme (3b) für die Elektrode (3) verbundenen ersten magnetisierbaren Ring (19) umfasst, und dass die Einrichtung zum Auslenken mehrere, insbesondere drei, über den Umfang des ersten magnetisierbaren Rings (19) verteilte und mit der Halterung (1) verbundene Spulen (21, 23, 25) umfasst.

4. Vorrichtung nach Anspruch 3, **dadurch gekennzeichnet, dass** die Einrichtung zum Auslenken einen mit den Spulen (21, 23, 25) verbundenen zweiten magnetisierbaren Ring (27) umfasst.

5. Vorrichtung nach Anspruch 1 oder 2, **Dadurch gekennzeichnet, dass** die Einrichtung zum Auslenken mindestens eine in die Halterung (1) eingedrehte Stellschraube (43) umfasst.

6. Vorrichtung nach Anspruch 6, **dadurch gekennzeichnet, dass** die Einrichtung zum Auslenken mindestens eine Druckfeder (45) umfasst, und dass die mindestens eine Druckfeder (45) die Aufnahme (3b) für die Elektrodenführung (3) in Anlage an der Stellschraube (43) hält..

7. Vorrichtung nach einem der vorhergehenden Ansprüche, **dadurch gekennzeichnet, dass** die Gelenklagerung Kräfte in allen Raumesrichtungen übertragen kann.

8. Vorrichtung nach einem der vorhergehenden Ansprüche, **dadurch gekennzeichnet, dass** der Drehpunkt (11) der Gelenklagerung (41, 39) außerhalb der Elektrodenführung (3a) liegt.

9. Vorrichtung nach einem der vorhergehenden Ansprüche, **dadurch gekennzeichnet, dass** die Halterung (1) drehbar gelagert ist, und dass ein Antrieb zum Drehen der Halterung (1) und mit ihr der Aufnahme (3b) für die Elektrodenführung (3a) vorgesehen ist.

10. Vorrichtung nach einem der vorhergehenden Ansprüche, **dadurch gekennzeichnet, dass** die Elektrodenführung (3a) als Rundführung (9) ausgebildet ist.

11. Vorrichtung nach einem der Ansprüche 1 bis 15, **dadurch gekennzeichnet, dass** die Elektrodenführung (3a) als zweiteilige Führung ausgebildet ist, die die Elektrode (9) radial spielfrei führt und/oder klemmt.

12. Vorrichtung nach einem der vorhergehenden Ansprüche, **dadurch gekennzeichnet, dass** eine Einrichtung zum Drehen der Elektrode (9) in der Elektrodenführung (3a) vorgesehen ist.

13. Vorrichtung nach einem der vorhergehenden Ansprüche, **dadurch gekennzeichnet, dass** eine Vorschubeinrichtung für die Elektrode (9) vorgesehen ist.

## Claims

1. Apparatus for erosion machining, having an electrode (9) and having a receptacle (3b) for an electrode guide (3), and having a holder (1) for the receptacle (3b), wherein the receptacle (3b) for the electrode guide (3) is mounted on the holder (1) by way of a pivot bearing, and the pivot bearing comprises a spherical cap (39) on the receptacle (3b) for the electrode guide and a counter-bearing on the holder (1) and wherein the pivot bearing is arranged at the lower end of the electrode guide (3), **characterized in that** the counter-bearing is formed on the holder (1) as a conical surface (41), and **in that** a device for deflecting the electrode guide (3) is provided at one end, opposite the pivot bearing (39, 41), of the electrode guide (3).

2. Apparatus according to Claim 1, **characterized in that** the device for deflecting introduces mechanical, hydraulic, pneumatic, magnetic or electric forces into the receptacle (3b) for the electrode guide (3).

3. Apparatus according to Claim 1 or 2, **characterized in that** the device for deflecting comprises a first magnetizable ring (19) connected to the receptacle (3b) for the electrode guide (3), and **in that** the device for deflecting comprises a plurality of, in particular three, coils (21, 23, 25) distributed around the circumference of the first magnetizable ring (19) and connected to the holder (1).

4. Apparatus according to Claim 3, **characterized in that** the device for deflecting comprises a second magnetizable ring (27) connected to the coils (21, 23, 25).

5. Apparatus according to Claim 1 or 2, **characterized in that** the device for deflecting comprises at least one adjusting screw (43) screwed into the holder (1).

6. Apparatus according to Claim 6, **characterized in that** the device for deflecting comprises at least one compression spring (45), and **in that** the at least one compression spring (45) holds the receptacle (3b) for the electrode guide (3) in abutment against the adjusting screw (43).

7. Apparatus according to one of the preceding claims, **characterized in that** the pivot bearing can transmit forces in all spatial directions.

8. Apparatus according to one of the preceding claims, **characterized in that** the pivot point (11) of the pivot bearing (41, 39) is located outside the electrode guide (3a).

9. Apparatus according to one of the preceding claims, **characterized in that** the holder (1) is mounted in a rotatable manner, and **in that** a drive for rotating the holder (1) and, together therewith, the receptacle (3b) for the electrode guide (3a) is provided.

10. Apparatus according to one of the preceding claims, **characterized in that** the electrode guide (3a) is in the form of a rotary guide (9).

11. Apparatus according to one of Claims 1 to 15, **characterized in that** the electrode guide (3a) is in the form of a two-part guide which guides the electrode (9) radially without play and/or clamps the latter.

12. Apparatus according to one of the preceding claims, **characterized in that** a device for rotating the electrode (9) in the electrode guide (3a) is provided.

13. Apparatus according to one of the preceding claims, **characterized in that** a feed device for the electrode (9) is provided.

## Revendications

1. Dispositif d'érosion présentant
une électrode (9),
un logement (3b) pour un guide (3) d'électrode ainsi que
un support (1) pour le logement (3b),
le logement (3b) du guide (3) d'électrode étant monté sur le support (1) par un palier articulé et le palier articulé comporte une calotte (39) prévue sur le logement (3b) du guide d'électrode et un palier complémentaire prévu sur le support (1),
le palier articulé étant disposé à l'extrémité inférieure du guide (3) d'électrode,
**caractérisé en ce que**
le palier complémentaire prévu sur le support (1) est configuré comme surface conique (41) et
**en ce qu'**un dispositif de déplacement du guide (3) d'électrode est prévu sur une extrémité du guide (3) d'électrode située à l'opposé du palier articulé (39, 41).

2. Ensemble selon la revendication 1, **caractérisé en ce que** le dispositif de déplacement applique des forces mécaniques, hydrauliques, pneumatiques, magnétiques ou électriques dans le logement (3b) prévu pour le guide (3) d'électrode.

3. Ensemble selon les revendications 1 ou 2, **caractérisé en ce que** le dispositif de déplacement comporte une première bague magnétisable (19) reliée au logement (3b) prévu pour le guide (3) d'électrode et **en ce que** le dispositif de déplacement comporte plusieurs bobines (21, 23, 25) réparties à la périphérie de la première bague magnétisable (19) et reliées au support (1).

4. Ensemble selon la revendication 3, **caractérisé en ce que** le dispositif de déplacement comporte une deuxième bague magnétisable (27) reliée aux bobines (21, 23, 25).

5. Ensemble selon les revendications 1 ou 2, **caractérisé en ce que** le dispositif de déplacement comporte au moins une vis d'ajustement (43) vissée dans le support (1).

6. Ensemble selon la revendication 6, **caractérisé en ce que** le dispositif de déplacement comporte au moins un ressort de compression (45) et **en ce que** le ou les ressorts de compression (45) maintiennent en appui sur la vis d'ajustement (43) le logement (3b) prévu pour le guide (3) d'électrode.

7. Ensemble selon l'une des revendications précédentes, **caractérisé en ce que** le montage articulé permet de transférer des forces dans toutes les directions de l'espace.

8. Ensemble selon l'une des revendications précédentes, **caractérisé en ce que** le centre de rotation (11) du montage articulé (41, 39) est situé à l'extérieur du guide (3a) d'électrode.

9. Ensemble selon l'une des revendications précédentes, **caractérisé en ce que** le support (1) est monté à rotation et **en ce qu'**un entraînement est prévu pour faire tourner le support (1) et avec lui le logement (3b) prévu pour le guide (3a) d'électrode.

10. Ensemble selon l'une des revendications précédentes, **caractérisé en ce que** le guide (3a) d'électrode est configuré comme guide rond (9).

11. Ensemble selon l'une des revendications 1 à 15, **caractérisé en ce que** le guide (3a) d'électrode est configuré comme guide en deux parties qui guide et/ou serre l'électrode (9) sans jeu radial.

12. Ensemble selon l'une des revendications précédentes, **caractérisé en ce qu'**il présente un dispositif de rotation de l'électrode (9) dans le guide (3a) d'électrode.

13. Ensemble selon l'une des revendications précédentes, **caractérisé en ce qu'**il présente un dispositif d'avancement de l'électrode (9).
